# EUROPÄISCHE PATENTSCHRIFT

(11) **EP 0 926 381 B1**
(45) Veröffentlichungstag und Bekanntmachung des Hinweises auf die Patenterteilung: **09.02.2005**
(21) Anmeldenummer: 98123160.8
(22) Anmeldetag: 04.12.1998
(51) Int. Cl.: F16F 7/12

(54) **Stossverzehrvorrichtung mit Zentriereinrichtung und Verformungsrohr**
Energy absorbing device having a centering device and a deformable pipe
Dispositif d'absorption d'énergie avec dispositif de centrage et avec un tube déformable

(30) Priorität: 24.12.1997 DE 19757857
(43) Veröffentlichungstag der Anmeldung: 30.06.1999
(73) Patentinhaber: ALSTOM LHB GmbH, 38239 Salzgitter (DE)
(72) Erfinder: Beier, Günter, Dipl.-Ing., 38259 Salzgitter (DE); Winzkowsky, Bernd, Dipl.-Ing., 38259 Salzgitter (DE); Hahne, Jochen, Dipl.-Ing., 38124 Braunschweig (DE); Heider, Wolfgang, Dipl.-Ing., 38723 Seesen (DE)

(56) Entgegenhaltungen:
- DE-A- 2 605 441
- DE-A- 19 627 061
- DE-U- 29 703 351
- DE-U- 29 703 843
- FR-A- 2 273 982
- US-A- 4 260 142
- US-A- 4 272 114
- PATENT ABSTRACTS OF JAPAN vol. 009, no. 245 (M-418), 2. Oktober 1985 & JP 60 098234 A (TOSHIBA KK), 1. Juni 1985

## Beschreibung

Die Erfindung betrifft eine Stoßverzehrvorrichtung mit Zentriereinrichtung und Verformungsrohr.

Aus der DE-PS 15 30 223 ist eine Vorrichtung zur Aufnahme übergroßer Stöße bestehend aus einem äußeren Druckrohr und einem inneren Verformungsrohr bekannt, die unter bleibender Verformung teleskopartig ineinander schiebbar sind, wobei zwischen Druckrohr und Verformungsrohr eine Buchse angeordnet ist, die innen eine konische innere Druckfläche aufweist. Das Verformungsrohr weist im Bereich der Buchse eine konische, äußere Gegenfläche auf und ist durch eine eingesetzte Platte, die den lichten Querschnitt des Verformungsrohrs versteift. Durch die zweckmäßige Auslegung der Platte (Beulblech) soll die Größe der Stoßbeanspruchung, bei der die bleibende Verformung des Verformungsrohrs einsetzen soll, in möglichst engem Streubereich festgelegt werden. Ein größerer Streubereich ist nachteilig, da eine Vorrichtung zur Aufnahme übergroßer Stöße einerseits von einer bestimmten Größe der Stoßbeanspruchung an zuverlässig wirksam werden muß, andererseits jedoch nicht unnötig früh ansprechen soll, da bei plastischen Verformungen der Vorrichtung mindestens jeweils das Verformungsrohr ausgetauscht werden muß.

Aus der DE-AS 19 47 819 ist es bekannt, den Streubereich einer Stoßverzehrvorrichtung möglichst klein zu halten, indem eine eingangs beschriebenen Vorrichtung anstelle des Beulbleches einen Abscherbund aufweist, der an dem äußeren Umfang des Verformungsrohrs angeordnet ist und an dem vor dem Ansprechen der Vorrichtung die dem Verformungsrohr zugewandte Stirnfläche des Druckrohres anliegt.

Erfolgt ein unzulässig großer Stoß, wird das Beulblech bzw. der Abscherbund plastisch verformt bzw. abgeschert und das Verformungsrohr unter Durchmesserverkleinerung durch die konische Druckfläche in das Druckrohr eingeschoben; wobei die Stoßenergie in Verformungsarbeit umgewandelt wird.

Aus dem DE-93 11 041.3 U1 ist eine Stoßverzehrvorrichtung für Längsstöße bekannt, die neben einer Durchschneidplatte ein Verformungsrohr aufweist, das die Stoßenergie im wesentlichen durch ungleichmäßige, plastische Verformungen zwischen in axialer Erstreckung des Verformungsrohrs angeordneten Trennplatten abbaut. Am Umfang des Verformungsrohrs angeordnete Verformungsöffnungen sollen die einfachere Verformung des Verformungsrohrs unterstützen.

Aus dem nächstliegenden Stand der Technik, der DE 297 03 351 U ist ein Element für das Absorbieren kinetischer Energie bekannt, das nach dem Prinzip der plastischen Verformung arbeitet und das aus zumindest einem blockförmigen Abschnitt eines dickwandigen Rohres aus Kunststoff gebildet ist. Dieser blockförmige Abschnitt soll eine Anfangselastizität und - bezogen auf das Kraft-Weg-Diagramm - einen nahezu rechteckförmigen plastischen Arbeitshub aufweisen. Zwei oder mehrere dieser blockförmigen Abschnitte können zu einer Säule zusammengesetzt werden, wobei zwischen den blockförmigen Abschnitten jeweils eine Platte angeordnet ist und ein in die Söule eingreifende Rundkörper mit den Platten im Sinne einer Führung zusammenwirkt. Der blockförmige Rohrabschnitt ist mindestens an einer Seite an einem Stützlager befestigt und an seinen Enden zwischen zwei Zentrierelementen angeordnet bzw. eingespannt. Die Zentrierelemente und damit die Enden des Rohrabschnittes bzw, einer durch mehrere dieser Rohrabschnitte gebildete Säule sind relativ zueinander gegen Verschiebungen quer zur Stoßrichtung gehalten, wobei dem Rohrabschnitt oder der Säule an den Enden je ein axiales Widerlager zugeordnet ist, welches die Zentrierelemente an der dem Rohrabschnitt oder der Säule zugewandten Seite aufweisen und welches den sich bei einem Stoß verformenden Rohrabschnitt oder die Säule axial abstützt. Als nachteilig anzusehen ist, dass das Erzeugen einer höher belastbaren Stoßverzehrvorrichtung nur durch Anordnung mehrerer blockförmiger Rohrabschnitte zu einer Säule erreichbar ist, was aber neben den Zentrierelementen den Einsatz von zusätzlichen Platten und einem rohrförmigen Rundkörper erforderlich macht, der diese Platten führt.

Aus der DE 196 27 061 A1 ist ein Deformationselement bekannt, welches einen Rohrabschnitt aus Kohlenstofffasern und Aramidfasern aufweist. Der Rohrabschnitt ist zur Energieumwandlung nach dem Stülpprinzip verformbar. Zur Einleitung des Umstülpvorganges schließt sich an das freie Rohrende ein stutzenartiges Bauteil mit einer konkaven, den äußeren Stülpradius bestimmenden Hohlkehle an. Bedingt durch die Art des Umformvorganges weicht der Rand am freien Rohrende beim Umstülpvorgang gegenüber der zugeordneten Abstützung und Zentrierung in Axial- und Querrichtung aus. Da für das freie Ende außerhalb der Hohlkehle keine Führung vorgesehen ist, scheint die Gefahr des Aufreißens und des unkontrollierten Ausweichens in den freien Raum gegeben.

Der Erfindung liegt die Aufgabe zugrunde, eine Vorrichtung zur Aufnahme übergroßer Stöße derart auszubilden, daß das Verformungsverhalten des Verformungsrohres verbessert wird und nach Ansprechen der Vorrichtung ein möglichst gleichmäßiger Stoßverzehr über den Verformungsweg erreicht wird.

Diese Aufgabe wird erfindungsgemäß durch die im Anspruch 1 gekennzeichnete Stoßverzehrvorrichtung gelöst.

Vorteilhafte Weiterbildungen sind in den Unteransprüchen 2 bis 9 angegeben.

Durch die Ausbildung der Stoßverzehreinrichtung gemäß den Merkmalen des Hauptanspruchs wird eine weitgehend regelmäßige Faltung des Verformungsrohrs erreicht und ein Aufreißen desselben vermieden.

Durch die Weiterbildung gemäß Anspruch 2 wird eine kleinbauende Ausführungsform der Erfindung angegeben.

Durch die Weiterbildung gemäß Anspruch 3 wird die regelmäßige Wulst- bzw. Faltenbildung bei der plastischen Verformung des Verformungsrohrs unterstützt.

Nachfolgend ist die Erfindung unter Bezugnahme auf eine schematische Zeichnung in drei Ausführungsbeispielen näher erläutert.

Es zeigen:
- Fig. 1: eine Stoßverzehrvorrichtung in Draufsicht in schematischer Darsteltung;
- Fig. 2: die Stoßverzehrvorrichtung gemäß Fig. 1 nach Ansprechen der Vorrichtung und Verformung des Verformungsrohrs in schematischer Darstellung;
- Fig. 3: ein Ausführungsbeispiel der Erfindung mit Spanneinrichtung in Seitenansicht.
- Fig. 4: ein zweites Ausführungsbeispiel der Erfindung in Seitenansicht und
- Fig. 5: ein drittes Ausführungsbeispiel der Erfindung in Verbindung mit einem Eisenbahnpuffer.

Die Stoßverzehrvorrichtung gemäß der Erfindung weist eine Zentriereinrichtung und ein Verformungsrohr 1 auf und ist an einer Seite an einem Stützlager 3 befestigt. Das Verformungsrohr 1 ist an seinen Enden zwischen zwei Zentrierelementen 2 der Zentriereinrichtung angeordnet bzw. eingespannt und gegen Querverschiebung, d. h., gegen Verschiebungen quer zur Stoßrichtung, gehalten bzw. gesichert. Dem Verformungsrohr 1 ist weiterhin an seinen Enden je ein axiales Widerlager zugeordnet. Die Zentrierelemente 2 weisen daher an der dem Verformungsrohr 1 zugewandten Seite ein axiales Widerlager auf, an dem sich das bei einem Stoß unter der Kraft F verformende Verformungsrohr 1 axial abstützt.

Die Zentrierelemente 2 sind mit Führungen 2.1, z.B. als Rohrstutzen ausgebildet, die jeweils an beiden Enden des Verformungsrohrs 1 von innen am Innenmantel des Verformungsrohrs 1 anliegen und somit eine Innenzentrierung darstellen, die eine Querverschiebung des Verformungsrohres 1 verhindert und die regelmäßige Faltung des Verformungsrohres unterstützt. Weiter weisen die Zentrierelemente 2 einen Bund 4 auf, an welchem die zugeordneten Enden des Verformungsrohres 1 axial abgestützt sind.

Der Außendurchmesser des Zentrierelementes 2 bzw. des Bundes 4 der Führungen 2.1 bzw. des Rohrstutzens erstreckt sich etwa bis zum Außendurchmesser der bei der Verformung des Verformungsrohres 1 entstehenden ringförmigen Wülste 5 (Falten).

Von Bedeutung für das Wesen der Erfindung ist, dass beim Faltungsvorgang des Verformungsrohres 1 außer den endseitigen Zentrierelementen 2 keine Führung des Verformungsrohres 1 bzw. seines Mantels erforderlich ist, um ein Ausknicken oder eine unzweckmäßige Verformung zu verhindern. Es ist lediglich erforderlich, eine axiale bzw. zentrische Stoßeinleitung über den Verformungsweg sicherzustellen. Dies erfolgt dadurch, dass die Zentrierelemente 2 gegen Querverschiebungen relativ zueinander gesichert bzw. geführt sind.

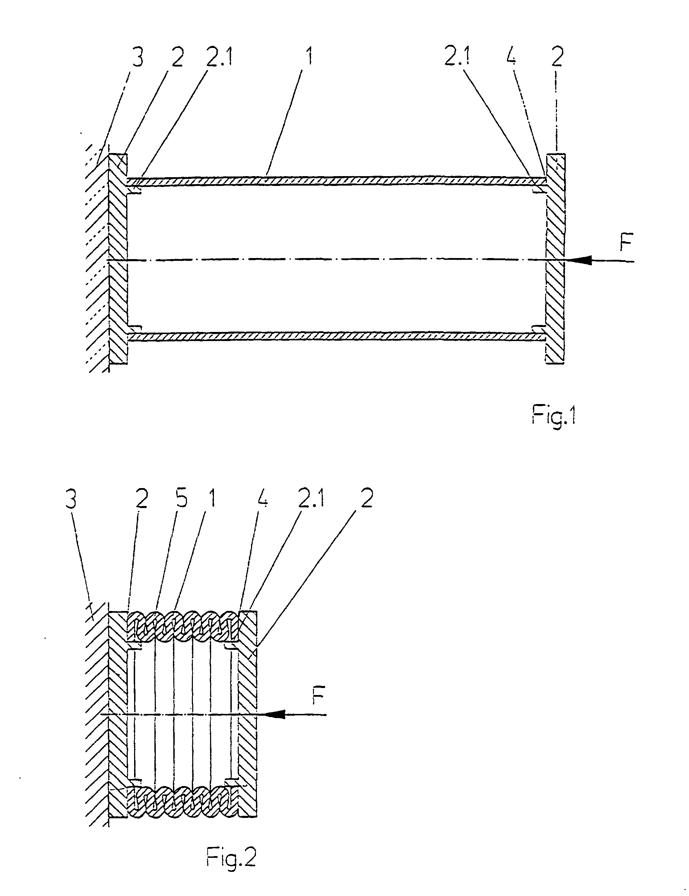

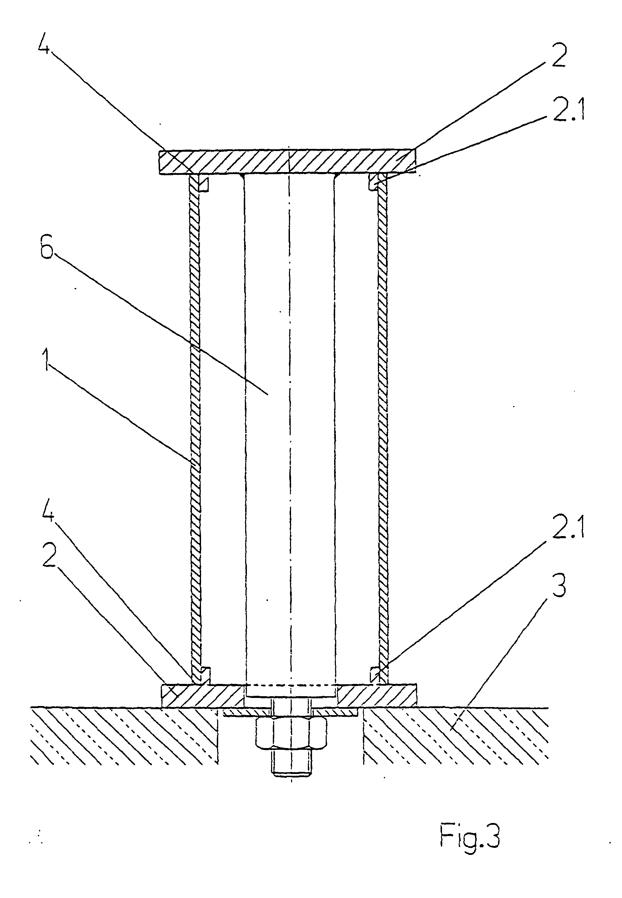

Bei den Figuren 1 und 2 handelt es nicht um Ausführungsbeispiele der Erfindung sondern um schematische Darstellungen, die das Verständnis der Erfindung, insbesondere hinsichtlich des Faltungsvorganges, erleichtern sollen. Das Verformungsrohr 1 kann mit einer Spanneinrichtung 6, z. B. mit einem Anker befestigt und/oder vorgespannt sein. Diese Bauform kann vorteilhaft zur Festlegung einer Stoßverzehrvorrichtung mit einseitigem Stützlager 3 und einem freien Ende vorgesehen werden, das nicht direkt gegen Querverschiebung am stoßzugewandten Ende des Verformungsrohres 1 gesichert ist. (Fig. 3).

Die Zentriereinrichtung für das Verformungsrohr 1 kann auch als Außenzentrierung mit mindestens bereichsweiser Umfassung bzw. Einfassung der Enden des Verformungsrohres 1 ausgebildet werden.

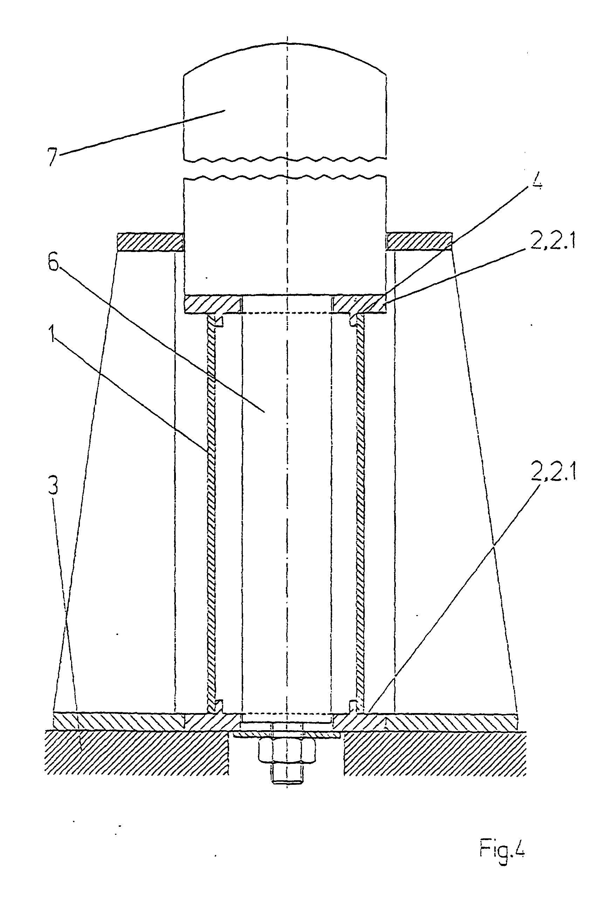

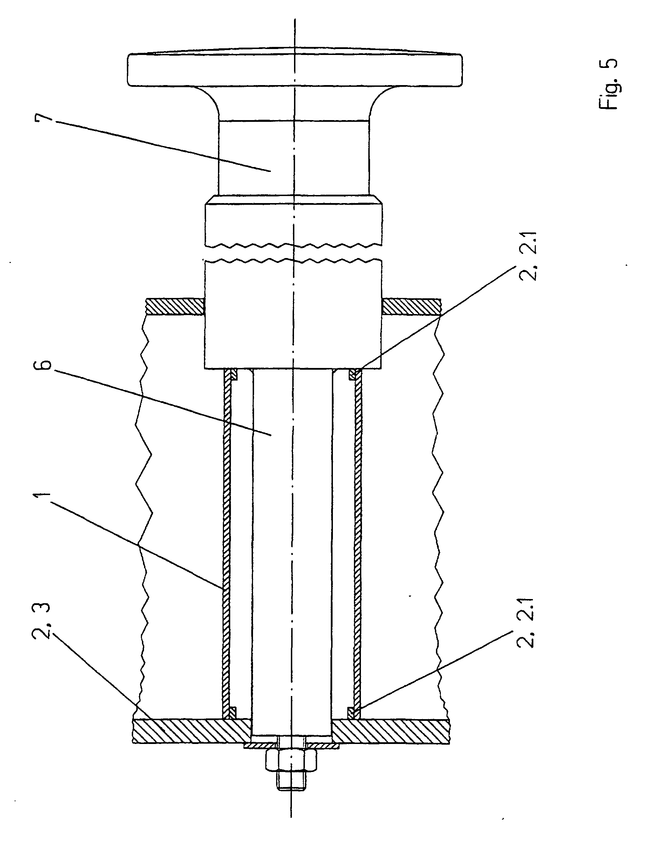

In zwei weiteren Ausführungsbeispielen der Erfindung (Fig. 4 und 5) ist das freie Ende des Verformungsrohres 1 in einem Stützbock am oberen bzw. vorderen Ende gegen Querverschiebungen relativ zur unteren Abstützung (Stützlager 3) gehalten und geführt. Vor dem vorderen Zentrierelement 2 ist ein Stößel 7 angeordnet bzw. befestigt. Diese Bauformen eignen sich z.B. für einen unteren Endanschlag für Aufzug- oder Förderanlagen. Auch für Schienenfahrzeuge sind derartige Bauformen, z. B. als Puffer oder Stoßverzehreinrichtung einsetzbar. Für diesen Anwendungsfall ist der Stößel 7 als Puffer für Schienenfahrzeuge mit Pufferteller und Schaft ausgebildet und mit dem Zentrierelement 2 fest verbunden. Der Stößel 7 bzw. der Puffer ist mit der Spanneinrichtung 6 fest verbunden und einschließlich des Verformungsrohres 1 mit der Spanneinrichtung 6 am hinteren Ende am Stützlager 3 befestigt.

Ein praktisch ausgeführtes, zylindrisches Verformungsrohr 1 weist in einer bevorzugten Ausführungsform eine Ausgangslänge von etwa 0,45 m und bei einer Wandstärke von etwa 8 mm einen Außendurchmesser von etwa 174 mm auf. Nach erfolgtem Stoß und erschöpftem Energieverformungsvermögen weist das Verformungsrohr fünf im wesentlichen gleichartige Falten bzw. Wülste 5 auf.

Die Länge des Verformungsrohres ist nach einem Faltungsvorgang auf 100 mm geschrumpft, d. h. der Verformungsweg beträgt ca. 350 mm und die Endlänge des Verformungsrohres 1 beträgt ca. 20 % der Ausgangslänge L. Um eine vollständige Faltung des Verformungsrohrs 1 zu erreichen, muß die Ausgangslänge L des Verformungsrohres 1 ein Vielfaches der gestreckten Länge des Wulstes 5 betragen. Das Energieaufnahmevermögen eines Verformungsrohres 1 mit o.g. Abmessungen beträgt ca. 850 KJ. Die Ansprechkraft beträgt etwa 3150 KN. Das hohe Energieaufnahmevermögen der erfindungsgemäßen Vorrichtung wird durch einen Vergleich mit Eisenbahnpuffem ersichtlich, die aber deutlich komplizierter und aufwendiger aufgebaut sind. Ein Klasse-A-Puffer hat ein Energieaufnahmevermögen von etwa 32 KJ und ein aufwendiger C-Klasse-Puffer eines von 70 KJ.

Der Erfindungsgegenstand ist allgemein dort einsetzbar, wo auf einem relativ kleinen Weg hohe Stoßenergien eines bewegten Systems abgebaut werden sollen. Hierzu zählen die bereits genannten Bereiche Schienenfahrzeuge, Aufzuganlagen und Förderanlagen wie auch der allgemeine Bereich Schwermaschinenbau mit bewegten Systemen.

### Bezugszeichenliste

- 1: Verformungsrohr
- 2: Zentrierelement
- 2.1: Führung
- 3: Stützlager
- 4: Bund
- 5: Wulst
- 6: Spanneinrichtung
- 7: Stößel

## Patentansprüche

1. Stoßverzehrvorrichtung mit Zentriereinrichtung und Verformungsrohr (1), die mindestens an einer Seite an einem Stützlager (3) befestigbar ist, wobei das Verformungsrohr (1) einstückig ausgebildet ist und an seinen Enden zwischen zwei Zentrierelementen (2) angeordnet bzw. eingespannt ist und die Zentrierelemente (2) und damit die Enden des Verformungsrohres (1) relativ zueinander gegen Verschiebungen quer zur Stoßrichtung gehalten sind und dem Verformungsrohr (1) an seinen Enden je ein axiales Widerlager zugeordnet ist, welches die Zentrierelemente (2) an der dem Verformungsrohr (1) zugewandten Seite aufweisen und welches das sich bei einem Stoß unter Wulstbildung verformende Verformungsrohr (1) axial abstützt, **dadurch gekennzeichnet, dass** das Verformungsrohr (1) aus dem Werkstoff Strahl besteht und dass das Verformungsrohr (1) eine Ausgangslänge L aufweist, die ein Vielfaches der gestreckten Länge eines Wulstes (5) beträgt.

2. Stoßverzehrvorrichtung nach Anspruch 1, **dadurch gekennzeichnet, dass** die Zentrierelemente (2) als Führungen (2.1) ausgebildet sind, die als Innenzentrierung jeweils an beiden Enden des Verformungsrohres (1) von innen am Innenmantel des Verformungsrohrs (1) anliegen und die einen Bund (4) aufweisen, an welchem die zugeordneten Enden des Verformungsrohres (1) axial abgestützt sind.

3. Stoßverzehrvorrichtung nach Anspruch 1 oder 2, **dadurch gekennzeichnet, dass** der Außendurchmesser des Zentrierelements (2) bzw. des Bundes (4) der Führungen (2.1) etwa bis zum Außendurchmesser der bei der Verformung des Verformungsrohres (1) entstehenden ringförmigen Wülste (5) erstreckt ist.

4. Stoßverzehrvorrichtung nach einem der Ansprüche 1 bis 3, **dadurch gekennzeichnet, dass** das Verformungsrohr (1) am und gegenüber dem Stützlager (3) mit einer Spanneinrichtung (6), z. B. einem Anker befestigt und/oder vorgespannt ist.

5. Stoßverzehrvorrichtung nach Anspruch 4, **dadurch gekennzeichnet, dass** am vorderen, dem Stoß zugewandten Ende des Verformungsrohres (1) ein Puffer für Schienenfahrzeuge angeordnet ist, der fest mit dem vorderen Zentrierelement (2) und der Spanneinrichtung (6) verbunden ist.

6. Stoßverzehrvorrichtung nach einem der Ansprüche 1 bis 5 außer Anspruch 2, **dadurch gekennzeichnet, dass** die Zentriereinrichtung als Außenzentrierung mit mindestens bereichsweiser Umfassung des Außenmantels des Verformungsrohres (1) ausgebildet ist.

7. Stoßverzehrvorrichtung nach einem der Ansprüche 1 bis 6, **dadurch gekennzeichnet, dass** das Verformungsrohr (1) aus dem Werkstoff Stahl St-52 besteht.

8. Stoßverzehrvorrichtung nach einem der Ansprüche 1 bis 7, **dadurch gekennzeichnet, dass** das Verformungsrohr (1) eine Wanddicke zwischen 5 und 10 mm aufweist.

9. Stoßverzehrvorrichtung nach einem der Ansprüche 1 bis 8, **dadurch gekennzeichnet, dass** das unverformte Verformungsrohr (1) einen Außendurchmesser zwischen 100 und 300 mm aufweist.

## Claims

1. Shock absorbing device with a centring mechanism and deformation pipe (1), which can be fastened at least on one side to a support bearing (3), wherein the deformation pipe (1) is designed in one piece and arranged or clamped at its ends between two centring elements (2) and the centring elements (2) and therefore the ends of the deformation pipe (1) are held relative to one another against displacements transverse to the shock direction and a respective axial abutment is associated with the deformation pipe (1) at its ends, the abutment having the centring elements (2) on the side facing the deformation pipe (1) and axially supporting the deformation pipe (1) which deforms in the event of a shock with the formation of a bulge, **characterised in that** the deformation pipe (1) consists of the material steel and **in that** the deformation pipe (1) has a starting length L which is a multiple of the extended length of a bulge (5).

2. Shock absorbing device according to claim 1, **characterised in that** the centring elements (2) are designed as guides (2.1) which, in each case, as an inner centring device, abut the inner casing of the deformation pipe (1) from inside at the two ends of the deformation pipe (1) and have a collar (4) on which the associated ends of the deformation pipe (1) are axially supported.

3. Shock absorbing device according to claim 1 or 2, **characterised in that** the external diameter of the centring element (2) or the collar (4) of the guides (2.1) is extended approximately up to the external diameter of the annular bulges (5) being produced during the deformation of the deformation pipe (1).

4. Shock absorbing device according to any one of claims 1 to 3, **characterised**
**in that** the deformation pipe (1) is fastened and/or braced on, and relative to, the abutment (3) with a fixing mechanism (6), for example a tie bolt.

5. Shock absorbing device according to claim 4, **characterised in that** a buffer for rail vehicles is arranged at the leading end of the deformation pipe (1) facing the shock, the buffer being rigidly connected to the leading centring element (2) and the fixing mechanism (6).

6. Shock absorbing device according to any one of claims 1 to 5, apart from claim 2, **characterised in that** the centring mechanism is designed as an outer centring device with at least region-wise encompassing of the outer casing of the deformation pipe (1).

7. Shock absorbing device according to any one of claims 1 to 6, **characterised in that** the deformation pipe (1) consists of the material steel St-52.

8. Shock absorbing device according to any one of claims 1 to 7, **characterised in that** the deformation pipe (1) has a wall thickness between 5 and 10 mm.

9. Shock absorbing device according to any one of claims 1 to 8, **characterised in that** the undeformed deformation pipe (1) has an external diameter between 100 and 300 mm.

## Revendications

1. Dispositif d'absorption de chocs avec un mécanisme de centrage et un tube de déformation (1), qui est apte à être fixé, au moins sur un côté, à un palier d'appui (3), étant précisé que le tube de déformation (1) est d'une seule pièce et est disposé ou serré à ses extrémités entre deux éléments de centrage (2), que les éléments de centrage (2) et, ainsi, les extrémités du tube de déformation (1) sont retenus l'un par rapport à l'autre à l'encontre de déplacements transversaux par rapport au sens des choc, et qu'il est prévu, associées aux extrémités du tube de déformation (1), des butées axiales qui présentent les éléments de centrage (2), sur le côté tourné vers le tube de déformation (1), et qui supportent axialement ledit tube de déformation (1) qui se déforme en formant un bourrelet, en cas de choc, **caractérisé en ce que** le tube de déformation (1) se compose d'acier et **en ce qu'**il présente une longueur initiale L qui est plusieurs fois supérieure à la longueur étirée d'un bourrelet (5).

2. Dispositif d'absorption de chocs selon la revendication 1, **caractérisé en ce que** les éléments de centrage (2) sont conçus comme des guides (2.1) qui sont appliqués de l'intérieur, comme centrage intérieur, contre les deux extrémités du tube de déformation (1), au niveau de l'enveloppe intérieure de celui-ci, et qui présentent une embase (4) contre laquelle les extrémités associées du tube de déformation (1) sont supportées axialement.

3. Dispositif d'absorption de chocs selon la revendication 1 ou 2, **caractérisé en ce que** le diamètre extérieur de l'élément de centrage (2) ou de l'embase (4) des guides (2.1) s'étend à peu près jusqu'au diamètre extérieur des bourrelets annulaires (5) qui se forment lors de la déformation du tube de déformation (1).

4. Dispositif d'absorption de chocs selon l'une des revendications 1 à 3, **caractérisé en ce que** le tube de déformation (1) est fixé et/ou contraint sur le palier d'appui (3) et par rapport à celui-ci grâce à un dispositif de serrage (6), par exemple un ancrage.

5. Dispositif d'absorption de chocs selon la revendication 4, **caractérisé en ce qu'**il est prévu à l'extrémité avant du tube de déformation (1) qui est tournée vers le choc un tampon pour véhicules ferroviaires qui est relié solidement à l'élément de centrage avant (2) et au dispositif de serrage (6).

6. Dispositif d'absorption de chocs selon l'une des revendications 1 à 5 sauf la revendication 2, **caractérisé en ce que** le dispositif de centrage est conçu comme un centrage extérieur qui entoure au moins par zones l'enveloppe extérieure du tube de déformation (1).

7. Dispositif d'absorption de chocs selon l'une des revendications 1 à 6, **caractérisé en ce que** le tube de déformation (1) se compose d'acier St-52.

8. Dispositif d'absorption de chocs selon l'une des revendications 1 à 7, **caractérisé en ce que** le tube de déformation (1) présente une épaisseur de paroi située entre 5 et 10 mm.

9. Dispositif d'absorption de chocs selon l'une des revendications 1 à 8, **caractérisé en ce que** le tube de déformation (1) non déformé présente un diamètre extérieur situé entre 100 et 300 mm.
